# EUROPÄISCHE PATENTSCHRIFT

(11) **EP 2 909 022 B1**
(45) Veröffentlichungstag und Bekanntmachung des Hinweises auf die Patenterteilung: **27.06.2018**
(21) Anmeldenummer: 13795404.6
(22) Anmeldetag: 14.10.2013
(51) Int. Cl.: B30B 3/04, B32B 17/10, B32B 37/18

(54) **VORRICHTUNG ZUM LAMINIEREN VON PLATTENFÖRMIGEN GEGENSTÄNDEN**
DEVICE FOR LAMINATING OF PLATE-SHAPED OBJECTS
DISPOSITIF POUR LE LAMINAGE D'OBJETS EN FORME DE PLAQUE

(30) Priorität: 22.10.2012 AT 11382012
(43) Veröffentlichungstag der Anmeldung: 26.08.2015
(73) Patentinhaber: LISEC Austria GmbH, 3353 Seitenstetten (AT)
(72) Erfinder: MADER, Leopold, 3364 Neuhofen/Ybbs (AT); BRUCKNER, Richard, 3325 Ferschnitz (AT)
(74) Vertreter: Beer & Partner Patentanwälte KG
(86) Internationale Anmeldenummer: PCT/AT2013/000171
(87) Internationale Veröffentlichungsnummer: WO 2014/063174

(56) Entgegenhaltungen:
- EP-A1- 2 433 792
- US-A- 3 730 079
- US-A- 5 167 757

## Beschreibung

Die Erfindung betrifft eine Vorrichtung zum Laminieren von plattenförmigen Gegenständen, insbesondere Glastafeln, mit den Merkmalen des Anspruchs 1.

Die vorliegende Erfindung wird anhand von Glastafeln erläutert, ist jedoch nicht auf diese beschränkt, sondern kann auch beim Laminieren anderer plattenförmiger Gegenstände verwendet werden.

Bei der Herstellung von Glastafeln, z.B. Verbundglasscheiben, wird zunehmend eine Flexibilisierung erwartet, die nicht nur unterschiedliche Glasstärken und Glasgrößen, sondern auch Sonderformen betrifft, welche von einer einfachen Rechteckform abweichen und schräge bzw. gekrümmte Ränder aufweisen.

Dementsprechend laufen die Glastafeln abwechselnd auch nicht immer am gleichen Ort und in der gleichen Breite sowie der gleiche Dicke durch den Spalt zwischen den Laminierwalzen durch. Dies macht es schwierig, des Druck der Laminierwalzen immer korrekt einzustellen.

Aus der EP 2 433 792 A1 ist eine Vorrichtung zum Laminieren bekannt, welche die Merkmale des einleitenden Teils des unabhängigen Anspruches 1 aufweist. Bei der Vorrichtung der EP 2 433 792 A1 wird der Schwenkrahmen, in dem die obere, verstellbare Walze gelagert ist, mit Hilfe von zwei Spindelantrieben relativ zur unteren Walze verstellt, um die Spaltbreite zwischen den Walzen einzustellen. Die Spindelantriebe sind miteinander durch eine Welle gekuppelt, wobei ein einziger Antriebsmotor vorgesehen ist. Zwischen den Spindelantrieben und den Lagern der verstellbaren Walze sind pneumatische Federn vorgesehen. Durch Wahl des Druckes, mit dem diese Federn beaufschlagt sind, wird der Druck, den die Walzen auf das zu laminierende Glas ausüben, eingestellt.

Der Erfindung liegt die Aufgabe zugrunde, eine Vorrichtung der eingangs genannten Art zur Verfügung zu stellen, welche eine gleichmäßige Kraftverteilung über die gesamte Breite der Laminierwalzen ermöglicht.

Gelöst wird diese Aufgabe bei einer Vorrichtung der eingangs genannten Art mit den Merkmalen von Anspruch 1.

Durch die mit der Kupplungsstange verbundenen Parallellenker, von denen nur einer angetrieben ist, erfolgt das Verstellen der verstellbaren Laminierwalze über die gesamte Breite der Laminierwalzen konstant. Auch die Presskraft wird über die gesamte Breite der Laminierwalzen konstant aufgebracht. Dies unabhängig davon, wo der jeweilige Abschnitt einer Glastafel gerade durch den Pressspalt bewegt wird.

Eine sehr kompakte Konstruktion ergibt sich, weil die Parallellenker zwei Schenkel aufweisen, von denen jeweils der erste Schenkel mit der Kupplungsstange und der jeweils zweite Schenkel mit dem die Lager für die Laminierwalze aufweisenden Schwenkrahmen verbunden ist. Dabei ist es insbesondere vorteilhaft, wenn sich die beiden Schenkel etwa im rechten Winkel zueinander erstrecken.

Bei der Erfindung ist die verstellbare Laminierwalze am Maschinengestell in einem Schwenkrahmen gelagert ist. Dies ergibt eine besonders steife Konstruktion.

Bevorzugte Ausführungsformen der Erfindung sind Gegenstand der Unteransprüche.

Weitere Merkmale und Vorteile der Erfindung ergeben sich aus der nachfolgenden Beschreibung eines bevorzugten Ausführungsbeispiels der Erfindung unter Bezugnahme auf die angeschlossenen Zeichnungen. Es zeigt:
- Fig. 1: eine erfindungsgemäße Vorrichtung zum Laminieren von plattenförmigen Gegenständen, insbesondere Glastafeln, im Schrägriss,

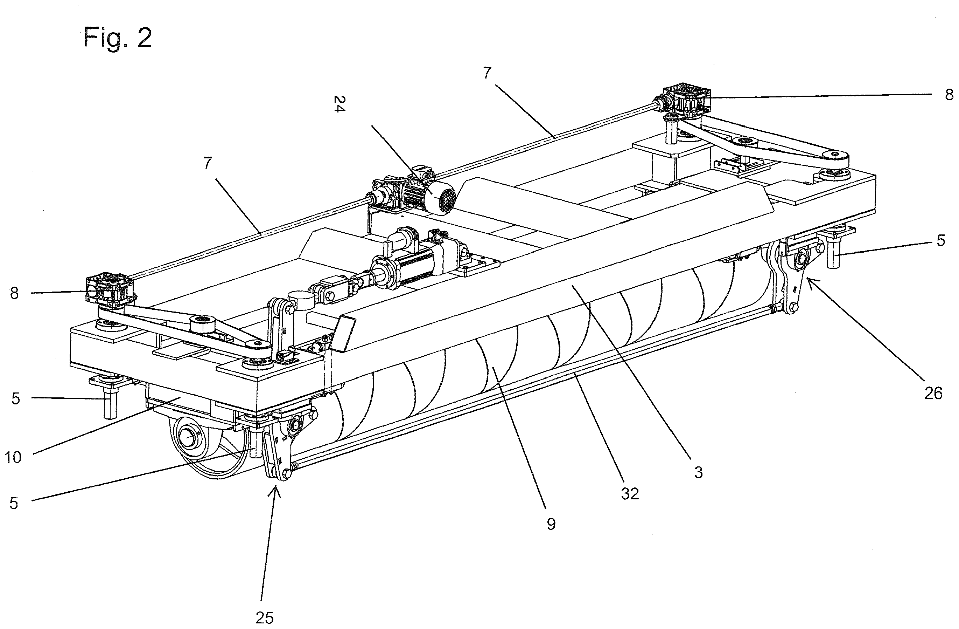

- Fig. 2: einen Tragrahmen, an dem ein Schwenkrahmen der Vorrichtung montiert ist,

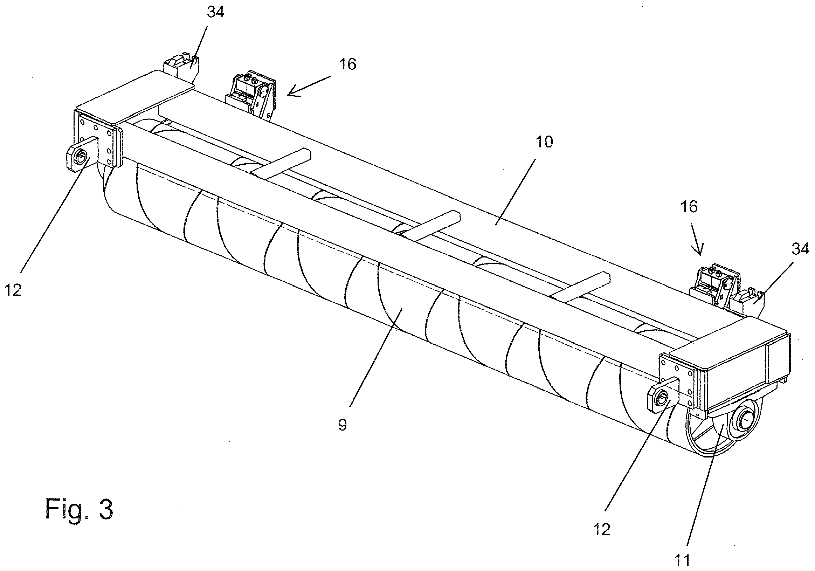

- Fig. 3: einen Schwenkrahmen, an dem eine Laminierwalze gelagert ist,

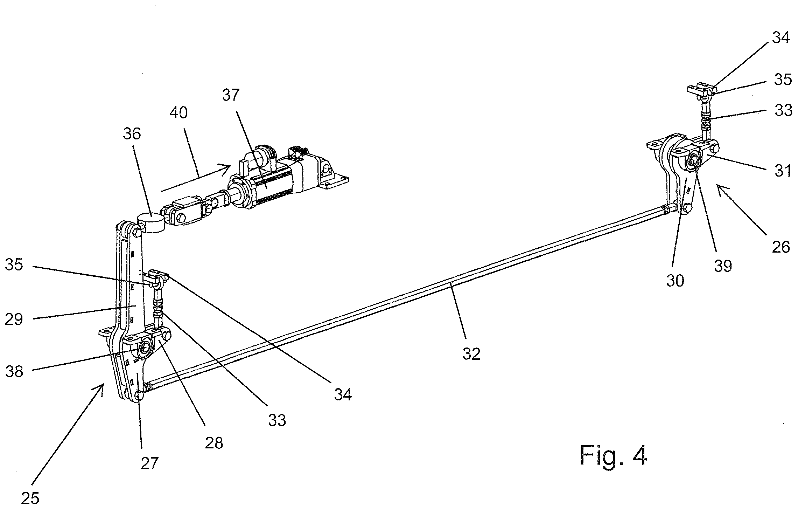

- Fig. 4: einen Antrieb zum Verschwenken des Schwenkrahmens und

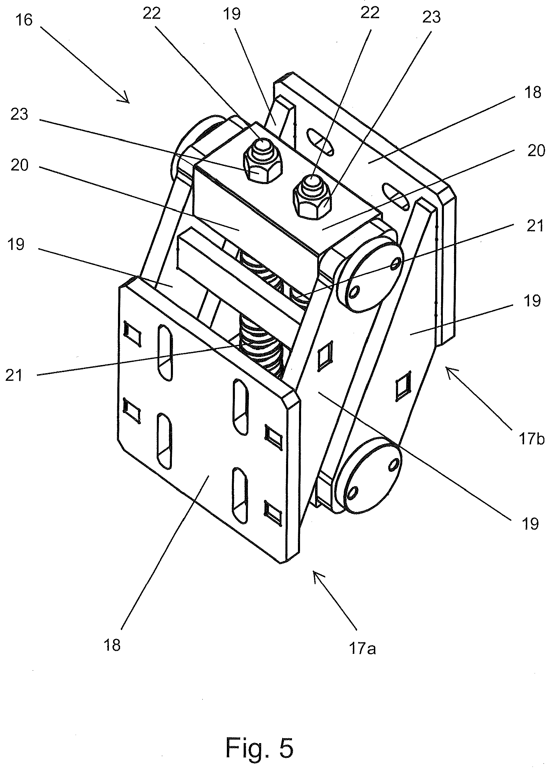

- Fig. 5: ein Detail der Lagerung des Schwenkrahmens.

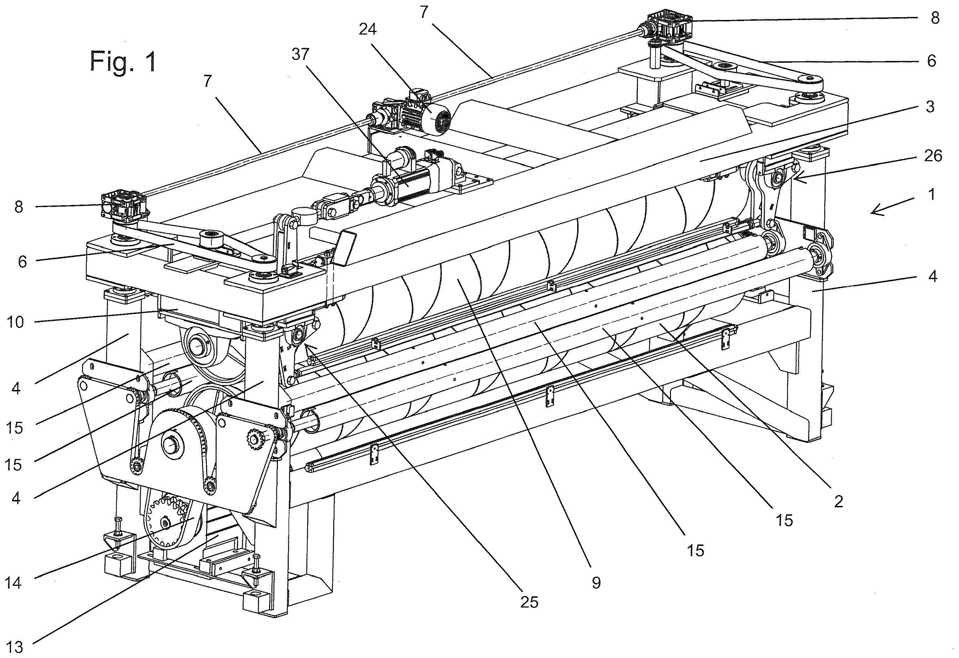

In Fig. 1 ist eine erfindungsgemäße Vorrichtung zum Laminieren von plattenförmigen Gegenständen, insbesondere Glastafeln, im Schrägriss dargestellt, die ein Maschinengestell 1 aufweist, in dem eine untere Laminierwalze 2 im Wesentlichen ortsfest drehbar gelagert ist. Das Maschinengestell 1 weist einen Tragrahmen 3 auf, der an vier Stehern 4 des Maschinengestells 1 über Spindeln 5 höhenverstellbar montiert ist. Die Spindeln 5 werden paarweise über Zahnriemen 6 gleichmäßig angetrieben, und zwar von einem Elektromotor 24 über zwei Wellen 7 und zwei Getriebe 8. Durch Drehen des Motors 24 in die eine oder andere Richtung kann der Tragrahmen 3 in seiner Höhe gegenüber den Stehern 4 verstellt werden, um die Breite des Walzspalts zwischen der unteren Laminierwalze 2 und einer oberen Laminierwalze 9 einstellen zu können.

Die obere Laminierwalze 9 ist in Lagern 11 an einem Schwenkrahmen 10 drehbar gelagert. Der Schwenkrahmen 10 ist über von Lagerflanschen gebildeten Schwenklager 12 am Tragrahmen 3 verstellbar, in der dargestellten Ausführungsform verschwenkbar, gelagert. Im Tragrahmen 3 sind nicht dargestellte Aufnahmen für die Lagerflansche der Schwenklager 12 angeordnet, welche Lagerbolzen aufnehmen, die in den Schwenklagern 12 gelagert sind. Die Lagerbolzen bilden daher feste Schwenkachsen für den Schwenkrahmen 10 im Tragrahmen 3.

Die untere Laminierwalze 2 wird von einem Motor 13 über einen Zahnriemen 14 angetrieben. Die obere Laminierwalze 9 kann ebenfalls drehend angetrieben werden. In Durchlaufrichtung der zu laminierenden Gegenstände vor und nach der unteren Laminierwalze 2 sind Stützwalzen 15 angeordnet, welche die zu laminierenden, plattenförmigen Gegenstände von unten unterstützen.

Auf der den Lagerflanschen der Schwenklager 12 gegenüber liegenden Seite sind Halterungen 16 angeordnet, die einerseits am Schwenkrahmen 10 und andererseits am Tragrahmen 3 befestigt sind. Die Halterungen 16 weisen jeweils zwei im Wesentlichen gleich aufgebaute aber gegeneinander gerichtete Montageeinheiten 17a, 17b mit Montageplatten 18 und Schenkeln 19 auf. An den freien Enden der Schenkel 19 sind Blöcke 20 drehbar gelagert, zwischen denen zwei Druckfedern 21 eingespannt sind. Zusammengehalten werden die Blöcke 20 und mit diesen die Montageeinheiten 17a, 17b mittels Schrauben 22, die durch die Druckfedern 21 geführt sind und somit gleichzeitig ein Ausknicken der Druckfedern 21 verhindern. Die Vorspannung der Druckfedern 21 kann über Muttern 23 eingestellt werden. Eine Lagerung über Zugfedern und/oder an einer anderen Form von Halterungen ist im Rahmen der Erfindung auch in Betracht gezogen.

Die Montageeinheit 17a der beiden Halterungen 16 ist mittels der Montageplatte 18 am Schwenkrahmen 10 angeschraubt und die Montageeinheit 17b der beiden Halterungen 16 ist mittels der Montageplatte 18 am Tragrahmen 3 angeschraubt. Die Vorspannkraft der Federn 21 ist so eingestellt, dass das Eigengewicht des Schwenkrahmens 10 mit der oberen Laminierwalze 9 und der sonstigen, am Schwenkrahmen 10 montierten Maschinenteile vorzugsweise vollständig aufgenommen wird. Das Eigengewicht kann gezielt auch über- oder unterkompensiert werden.

Um den Pressdruck der oberen Laminierwalze 9 auf die untere Laminierwalze 2 bzw. die dazwischen durchgeführten Glastafeln zu erzeugen, sind zwei Parallellenker 25, 26 vorgesehen. In der dargestellten Ausführungsform weist der Parallellenker 25 drei Schenkel 27, 28, 29 und der andere Parallellenker 26 zwei Schenkel 30, 31 auf. Die ersten, unteren Schenkel 27, 30 der Parallellenker 25, 26 sind über eine Kupplungsstange 32, die als Zugstange ausgeführt ist, miteinander verbunden. Die etwa im rechten Winkel davon abstehenden zweiten Schenkel 28, 31 der Parallellenker 25, 26 sind über Verbindungselemente 33, im dargestellten Ausführungsbeispiel Zugelemente, mit Aufnahmen 34, die am Schwenkrahmen 10 vorgesehen sind, gelenkig verbunden, insbesondere mit Lagerbolzen 35 in U-förmige Aufnahmen 34 eingehängt.

Der dritte Schenkel 29 des einen Parallellenkers 25 liegt in der dargestellten Ausführungsform in einer Linie mit dem ersten Schenkel 27 und ist über eine Kraftmesseinrichtung 36 mit einem Antrieb 37 verbunden. Der Antrieb 37 kann beispielsweise ein elektrischer Antrieb sein, der in Richtung des Pfeiles 40 am dritten Schenkel 29 anzieht. Da die Parallellenker 25, 26 in Lagern 38, 39 am Tragrahmen 3 gelagert sind, wird die Zugkraft des Antriebs 37 über die Kupplungsstange 32 auf beide Parallellenker 25, 26 und von diesen über die zweiten Schenkel 28, 31 und die Verbindungselemente 33 gleichmäßig auf den Schwenkrahmen 10 und von diesem auf die obere Laminierwalze 9 übertragen, die nach unten gezogen wird. Eine ausreichende Biegesteifigkeit der oberen und unteren Laminierwalzen 2, 9 vorausgesetzt kann somit über die gesamte Breite der Laminierwalzen 2, 9 der gleiche Pressdruck aufgebracht werden. Über die Kraftmesseinrichtung 36 kann die Presskraft exakt erfasst werden.

Auf der Einlaufseite der erfindungsgemäßen Vorrichtung kann eine Vorrichtung zum Erfassen der Art, Geometrie und Lage der zu laminierenden Gegenstände, wie z.B. Glastafeln, angeordnet sein, wodurch berechnet werden kann, wie breit der gerade zwischen den Laminierwalzen 2, 9 befindliche Abschnitt der Glastafel ist, sodass abgesehen davon, dass unterschiedliche Arten von Gegenständen unterschiedlichen Presskräfte erfordern können, auch aufgrund der aktuellen Breite des Gegenstandes im Pressspalt berechnet werden kann bzw. bekannt ist, wie groß die Presskraft idealerweise sein sollte. Da die gerade wirksame Kraft des auf die Parallellenker 25, 26 wirkenden Antriebs 37 durch die Kraftmesseinrichtung 36 ebenfalls bekannt ist, ist eine äußerst präzise Kontrolle bzw. Steuerung der Presskraft zwischen den Laminierwalzen 2, 9 möglich. Die Breite des Pressspaltes kann gleichzeitig in Abhängigkeit von der Dicke der zu laminierenden Gegenstände über den Motor 24 eingestellt werden.

Zusammenfassend kann ein Ausführungsbeispiel der Erfindung wie folgt beschrieben werden:
Eine Vorrichtung zum Laminieren von plattenförmigen Gegenständen, insbesondere Glastafeln, weist zwei Laminierwalzen 2, 9 auf, von denen wenigstens eine Laminierwalze 2 angetrieben ist und zwischen denen die plattenförmigen Gegenstände zum Laminieren durchgeführt werden. Eine Laminierwalze 2 ist vorzugsweise fest in einem Maschinengestell 1 gelagert und die andere Laminierwalze 9 ist verstellbar im Maschinengestell 1 gelagert. Die verstellbar im Maschinengestell 1 gelagerte Walze 9 ist im Bereich ihrer Enden in mit Parallellenkern 25, 26 verbundenen Lagern 11 gelagert. Die Parallellenker 25, 26 sind über einen Tragrahmen 3 am Maschinengestell 1 gelagert und mittels einer Kupplungsstange 32 miteinander verbunden. Einer der beiden Parallellenker ist mit einem Antrieb 37 verbunden.

## Patentansprüche

1. Vorrichtung zum Laminieren von plattenförmigen Gegenständen, insbesondere Glastafeln, mit zwei Laminierwalzen (2, 9), von denen wenigstens eine Laminierwalze (2) angetrieben ist und zwischen denen die plattenförmigen Gegenstände zum Laminieren durchgeführt werden, wobei eine Laminierwalze (2) in einem Maschinengestell (1) vorzugsweise fest gelagert ist und die andere Laminierwalze (9) im Maschinengestell (1) verstellbar gelagert ist, **dadurch gekennzeichnet, dass** die verstellbar im Maschinengestell (1) gelagerte Walze (9) im Bereich ihrer Enden in mit Parallellenkern (25, 26) verbundenen Lagern (11) gelagert ist, dass die Parallellenker (25, 26) im Maschinengestell (1) gelagert und mittels einer Kupplungsstange (32) miteinander verbunden sind, dass die Kupplungsstange (32) eine Zugstange ist und dass einer der beiden Parallellenker (25) mit einem Antrieb (37) verbunden ist.

2. Vorrichtung nach Anspruch 1, **dadurch gekennzeichnet, dass** die Parallellenker (25, 26) zwei Schenkel (27, 28; 30, 31) aufweisen, von denen jeweils der erste Schenkel (27, 30) mit der Kupplungsstange (32) und der jeweils zweite Schenkel (28, 31) mit einem Lager (11) für die Laminierwalze (9) verbunden ist.

3. Vorrichtung nach Anspruch 2, **dadurch gekennzeichnet, dass** sich die Schenkel (27, 28; 30, 31) etwa im rechten Winkel zueinander erstrecken.

4. Vorrichtung nach Anspruch 2, **dadurch gekennzeichnet, dass** einer der Parallellenker (25) einen dritten Schenkel (29) aufweist, an dem der Antrieb (37) angreift.

5. Vorrichtung nach Anspruch 4, **dadurch gekennzeichnet, dass** der dritte Schenkel (29) und der erste Schenkel (27) im Wesentlichen in einer Linie liegen.

6. Vorrichtung nach einem der Ansprüche 1 bis 5, **dadurch gekennzeichnet, dass** die verstellbare Laminierwalze (9) am Maschinengestell (1) in einem Schwenkrahmen (10) gelagert ist.

7. Vorrichtung nach Anspruch 2 und 6, **dadurch gekennzeichnet, dass** der jeweils zweite Schenkel (28, 31) der Parallellenker (25, 26) mit dem Schwenkrahmen (10) verbunden ist.

8. Vorrichtung nach Anspruch 6 oder 7, **dadurch gekennzeichnet, dass** der Schwenkrahmen (10) am Maschinengestell (1) über Schwenklager (12) gelagert ist und dass wenigstens eine Feder (21) zur Gewichtskompensation des Schwenkrahmens (10) und der an diesem angeordneten Maschinenelemente vorgesehen ist.

9. Vorrichtung nach Anspruch 8, **dadurch gekennzeichnet, dass** die Feder (21) am Schwenkrahmen (10) an einer von den Schwenklagern (12) entfernten, insbesondere gegenüberliegenden, Stelle angeordnet ist.

10. Vorrichtung nach Anspruch 9, **dadurch gekennzeichnet, dass** die Feder (21) eine Zug- oder Druckfeder ist und an Halterungen (16) gelagert ist, von denen eine Montageeinheit (17a) am Schwenkrahmen (10) und eine andere Montageeinheit (17b) am Maschinengestell (1) angeordnet ist.

11. Vorrichtung nach einem der Ansprüche 1 bis 10, **dadurch gekennzeichnet, dass** zwischen dem Antrieb (37) und dem Parallellenker (26) eine Kraftmesseinrichtung (36) angeordnet ist.

12. Vorrichtung nach einem der Ansprüche 6 bis 11, **dadurch gekennzeichnet, dass** ein Tragrahmen (3) am Maschinengestell (1) verstellbar gelagert ist und dass der Schwenkrahmen (10) am Tragrahmen (3) gelagert ist.

13. Vorrichtung nach Anspruch 12, **dadurch gekennzeichnet, dass** die Parallellenker (25, 26) über den Tragrahmen (3) am Maschinengestell (1) gelagert sind.

14. Vorrichtung nach einem der Ansprüche 1 bis 13, **gekennzeichnet durch** eine Einrichtung zum Erfassen der Geometrie und Lage der der Vorrichtung zugeführten plattenförmigen Gegenstände.

## Claims

1. Device for laminating plate-shaped articles, in particular glass panes, having two laminating rollers (2, 9), of which at least one laminating roller (2) is driven and between which the plate-shaped articles are guided through for lamination, wherein a laminating roller (2) is preferably fixedly mounted in a machine frame (1) and the other laminating roller (9) is adjustably mounted in the machine frame (1), **characterized in that** the roller (9), which is adjustably mounted in the machine frame (1), is mounted in the region of the ends thereof in bearings (11) connected to parallel links (25, 26), that the parallel links (25, 26) are mounted in the machine frame (1) and connected to one another by means of a coupling rod (32), that the coupling rod (32) is a tie rod and that one of the two parallel links (25) is connected to a drive (37).

2. Device according to claim 1, **characterized in that** the parallel links (25, 26) have two legs (27, 28; 30, 31), of which the respective first leg (27, 30) is connected to the coupling rod (32) and the respective second leg (28, 31) to a bearing (11) for the laminating roller (9).

3. Device according to claim 2, **characterized in that** the legs (27, 28; 30, 31) extend approximately at a right angle to each other.

4. Device according to claim 2, **characterized in that** one of the parallel links (25) has a third leg (29) on which the drive (37) acts.

5. Device according to claim 4, **characterized in that** the third leg (29) and the first leg (27) lie substantially in a line.

6. Device according to one of the claims 1 to 5, **characterized in that** the adjustable laminating roller (9) is mounted on the machine frame (1) in a pivot frame (10).

7. Device according to claim 2 and 6, **characterized in that** the respective second leg (28, 31) of the parallel links (25, 26) is connected to the pivot frame (10).

8. Device according to claim 6 or 7, **characterized in that** the pivoting frame (10) is mounted on the machine frame (1) via pivot bearings (12) and that at least one spring (21) is provided for weight compensation of the pivot frame (10) and the machine elements arranged thereon.

9. Device according to claim 8, **characterized in that** the spring (21) is arranged on the pivot frame (10) at a location remote from the pivot bearings (12), in particular opposite thereof.

10. Device according to claim 9, **characterized in that** the spring (21) is a tension or compression spring and is mounted on holders (16), of which one mounting unit (17a) is arranged on the pivot frame (10) and another mounting unit (17b) on the machine frame (1).

11. Device according to one of the claims 1 to 10, **characterized in that** a force measuring device (36) is arranged between the drive (37) and the parallel link (26) .

12. Device according to one of the claims 6 to 11, **characterized in that** a support frame (3) is adjustably mounted on the machine frame (1) and that the pivot frame (10) is mounted on the support frame (3).

13. Device according to claim 12, **characterized in that** the parallel links (25, 26) are mounted on the machine frame (1) via the support frame (3).

14. Device according to one of the claims 1 to 13, **characterized by** a device for detecting the geometry and position of the plate-shaped objects supplied to the device.

## Revendications

1. Dispositif pour le laminage d'objets en forme de plaque, en particulier de panneaux de verre, avec deux cylindres de laminoir (2, 9) dont au moins un cylindre de laminoir (2) est entraîné et entre lesquels les objets en forme de plaque sont passés pour le laminage, un cylindre de laminoir (2) étant supporté de préférence de manière fixe dans un bâti de machine (1) et l'autre cylindre de laminoir (9) étant supporté de manière ajustable dans le bâti de machine (1), **caractérisé en ce que** le cylindre (9) supporté de manière ajustable dans le bâti de machine (1) est supporté au niveau de ses extrémités dans des paliers (11) reliés à des bielles parallèles (25, 26), **en ce que** les bielles parallèles (25, 26) sont supportées dans le bâti de machine (1) et reliées entre elles au moyen d'une tringle de couplage (32), **en ce que** la tringle de couplage (32) est une tringle de traction et **en ce que** l'une des bielles parallèles (25) est reliée à un entraînement (37).

2. Dispositif selon la revendication 1, **caractérisé en ce que** les bielles parallèles (25, 26) présentent deux bras (27, 28 ; 30, 31) dont le premier bras (27, 30) est relié à la tringle de couplage (32) et le deuxième bras (28, 31) à un palier (11) pour le cylindre de laminoir (9).

3. Dispositif selon la revendication 2, **caractérisé en ce que** les bras (27, 28 ; 30, 31) s'étendent approximativement à angle droit l'un de l'autre.

4. Dispositif selon la revendication 2, **caractérisé en ce que** l'une des bielles parallèles (25) présente un troisième bras (29) sur lequel l'entraînement (37) se met en prise.

5. Dispositif selon la revendication 4, **caractérisé en ce que** le troisième bras (29) et le premier bras (27) se trouvent sensiblement sur la même ligne.

6. Dispositif selon l'une des revendications 1 à 5, **caractérisé en ce que** le cylindre de laminoir (9) ajustable est supporté sur le bâti de machine (1) dans un cadre basculant (10).

7. Dispositif selon les revendications 2 et 6, **caractérisé en ce que** le deuxième bras (28, 31) de chaque bielle parallèle (25, 26) est relié au cadre basculant (10).

8. Dispositif selon la revendication 6 ou 7, **caractérisé en ce que** le cadre basculant (10) est supporté sur le bâti de machine (1) par des paliers basculants (12) et **en ce qu'**au moins un ressort (21) est prévu pour compenser le poids du cadre basculant (10) et des éléments de machine disposés sur celui-ci.

9. Dispositif selon la revendication 8, **caractérisé en ce que** le ressort (21) est disposé sur le cadre basculant (10) à un endroit éloigné des paliers basculants (12), en particulier faisant face à ceux-ci.

10. Dispositif selon la revendication 9, **caractérisé en ce que** le ressort (21) est un ressort de traction ou de compression et est supporté sur des montures (16) dont une unité de montage (17a) est disposée sur le cadre basculant (10) et une autre unité de montage (17b) sur le bâti de machine (1).

11. Dispositif selon l'une des revendications 1 à 10, **caractérisé en ce qu'**une unité de mesure de la force (36) est disposée entre l'entraînement (37) et la bielle parallèle (26).

12. Dispositif selon l'une des revendications 6 à 11, **caractérisé en ce qu'**un cadre portant (3) est disposé de façon ajustable sur le bâti de machine (1) et **en ce que** le cadre basculant (10) est supporté sur le cadre portant (3).

13. Dispositif selon la revendication 12, **caractérisé en ce que** les bielles parallèles (25, 26) sont supportées sur le bâti de machine (1) par l'intermédiaire du cadre portant (3).

14. Dispositif selon l'une des revendications 1 à 13, **caractérisé en ce qu'**il comporte une installation pour détecter la géométrie et la position des objets en forme de plaque amenés au dispositif.
